# EUROPÄISCHE PATENTSCHRIFT

(11) **EP 2 143 153 B1**
(45) Veröffentlichungstag und Bekanntmachung des Hinweises auf die Patenterteilung: **15.05.2013**
(21) Anmeldenummer: 08735452.8
(22) Anmeldetag: 20.03.2008
(51) Int. Cl.: H02N 2/14, H02N 2/10

(54) **FESTKÖRPERAKTORISCHER, INSBESONDERE PIEZOELEKTRISCHER ANTRIEB UND VERFAHREN ZUM GEWINNEN VON SENSORDATEN AUS EINEM FESTKÖRPERAKTORISCHEN, INSBESONDERE PIEZOELEKTRISCHEN ANTRIEB**
SOLID-STATE ACTUATOR, PARTICULARLY PIEZOELECTRIC, DRIVE AND METHOD FOR THE ACQUISITION OF SENSOR DATA FROM A SOLID-STATE ACTUATOR, PARTICULARLY PIEZOELECTRIC, DRIVE
ENTRAÎNEMENT À ACTIONNEURS À L'ÉTAT SOLIDE, NOTAMMENT ENTRAÎNEMENT PIÉZOÉLECTRIQUE, ET PROCÉDÉ POUR OBTENIR DES DONNÉES DE DÉTECTION D'UN ENTRAÎNEMENT À ACTIONNEURS À L'ÉTAT SOLIDE, NOTAMMENT D'UN ENTRAÎNEMENT PIÉZOÉLECTRIQUE

(30) Priorität: 03.04.2007 DE 102007016114
(43) Veröffentlichungstag der Anmeldung: 13.01.2010
(73) Patentinhaber: Continental Automotive GmbH, 30165 Hannover (DE)
(72) Erfinder: BLUME, Heinrich-Jochen, 64291 Darmstadt (DE); BUXMEYER, Walter, 63303 Dreieich (DE); GOTTLIEB, Bernhard, 81739 München (DE); KAPPEL, Andreas, 85649 Brunnthal (DE); KISSEL, Robert, Wolfgang, 63329 Egelsbach (DE); MITTENBÜHLER, Karl-Heinz, 64347 Griesheim (DE); SCHWEBEL, Tim, 80337 München (DE); WALLENHAUER, Carsten, 01987 Schwarzheide (DE)
(86) Internationale Anmeldenummer: PCT/EP2008/053411
(87) Internationale Veröffentlichungsnummer: WO 2008/119681

(56) Entgegenhaltungen:
- EP-A- 1 098 429
- EP-A- 1 319 859
- WO-A-2004/102127
- DE-A1-102005 024 317
- DE-A1-102005 030 135
- DE-A1-102006 029 925

## Beschreibung

Die Erfindung bezieht sich auf einen festkörperaktorischen, insbesondere piezoelektrischen Antrieb mit den oberbegrifflichen Merkmalen des Patentanspruchs 1 bzw. auf ein Verfahren zum Gewinnen von Sensordaten aus einem festkörperaktorischen, insbesondere piezoelektrischen Antrieb.

Die DE 199 52 946 A1 beschreibt einen piezoelektrischen Antrieb, der auch als Piezoringmotor (PRM) bezeichnet wird. Dabei führt durch einen Antriebskörper eine Bohrung, durch welche eine Welle geführt ist. Die Welle liegt schlüssig so an der Innenwandung der Bohrung an, dass die Welle in Rotation versetzbar ist durch eine translatorische Bewegung des Antriebskörpers in einer Ebene senkrecht zur Welle. Der Antriebskörper wird von zwei oder mehr piezoelektrischen Aktoren zu einer solchen translatorischen Bewegung angetrieben.

Der Piezoringmotor zeichnet sich unter anderem durch ein hohes Drehmoment, eine hohe Stellgenauigkeit, eine flache Bauform und inhärente Sensoreigenschaften aus. Die Kombination dieser positiven Eigenschaften ist unter Stellantrieben einzigartig. Aufgrund der nicht-resonanten Betriebsart lässt das Piezoringmotor-Prinzip sich in weiten Grenzen skalieren.

Die WO 2004/102127 A1 beschreibt einen inkrementellen Antrieb, bei dem ein Mitnehmerelement mit Piezoelementen eine mit einer Drehachse verbundenen Konturscheibe antreibt.

Vorliegend wird insbesondere der Einsatz eines solchen Piezoringmotors als ein Kleinstantrieb betrachtet, der besonders für Antriebe in Fahrzeuginstrumenten geeignet ist. Neben dem Treiben eines Zeigers eines Fahrzeuginstruments, muss der Antrieb auch in der Lage sein, einen mechanischen Anschlag zu erkennen, um eine sichere Positionsinitialisierung eines derart ausgestalteten Anzeigeinstrumentes zu gewährleisten. Bisher ist jedoch kein Verfahren bekannt, dass eine sichere Anschlagsdetektion für einen solchen Antrieb ermöglicht.

Die DE 10 2005 024 317 A1 beschreibt ein Verfahren zur Messung eines Lastmomentes an einem Piezoringmotor durch Messen einer Phasenverschiebung zwischen Ladungs- und Spannungsansteuerfunktion der piezoelektrischen Aktoren. Ein ähnliches Verfahren ist eine Messung einer Hysteresefläche einer Spannungs-Ladungs-Funktion der piezoelektrischen Aktoren, welche proportional zur abgegebenen Energie ist. Die genannten Verfahren basieren auf der Messung der Aktorladung und Aktorspannung.

Bei der Anwendung des Piezoringmotors für Cockpitinstrumente stehen Kosten klar im Fokus. Eine Ladungsmessung benötigt zusätzliche Bauelemente, die weitere Kosten verursachen und die Konkurrenzfähigkeit des Produktes senken.

Die Aufgabe der Erfindung besteht darin, einen festkörperaktorischen, insbesondere piezoelektrischen Antrieb bzw. ein Verfahren zum Gewinnen von Sensordaten vorzuschlagen, welche eine Anschlagserkennung beim Antreiben eines solchen festkörperaktorischen Antriebs ermöglichen.

Diese Aufgabe wird gelöst durch einen festkörperaktorischen, insbesondere piezoelektrischen Antrieb mit den Merkmalen des Patentanspruchs 1, durch eine Schaltungsanordnung eines solchen Antriebs mit den Merkmalen des Patentanspruchs 7 bzw. durch ein Verfahren zum Gewinnen von Sensordaten mit den Merkmalen des Patentanspruchs 9, welche zum Gewinnen von Sensordaten ausgebildet sind und insbesondere eine Anschlagserkennung beim Antreiben eines solchen festkörperaktorischen Antriebs ermöglichen. Vorteilhafte Ausgestaltungen sind Gegenstand abhängiger Ansprüche.

Erfindungsgemäß ist die Schaltungsanordnung ausgestaltet und/oder gesteuert, während des Messens der elektrischen Größe an dem zumindest einen ersten der Festkörperaktoren den zumindest einen ersten der Festkörperaktoren nicht zu einer Bewegung anzusteuern.

Bevorzugt wird demgemäß ein festkörperaktorischer Antrieb, insbesondere piezoelektrischer Antrieb, zum Antreiben einer Welle in Rotation um deren Wellenachse und zum Gewinnen von Sensordaten mit einem Antriebskörper, wobei ein umlaufender Wellen-Umfangsbereich der Welle in einem längs des umlaufenden Wellen-Umfangsbereichs wandernden Kontaktabschnitt in formschlüssigen Kontakt oder in Reibkontakt mit einem in einem umlaufenden Wandungs-Umfangsbereichs des Antriebskörpers wandernden Wandungs-Kontaktabschnitt versetzbar ist, mit zumindest zwei Festkörperaktoren, die zwischen Lagern und dem Antriebskörper angeordnet sind zum Versetzen des Antriebskörpers in eine umlaufende Verschiebebewegung zum Antreiben der Welle, und mit einer Schaltungsanordnung zum Ansteuern zumindest zweier der Festkörperaktoren und zum Gewinnen der Sensordaten, wobei die Schaltungsanordnung ausgestaltet und/oder gesteuert ist zum Messen einer elektrischen Größe an zumindest einem ersten solcher Festkörperaktoren während gleichzeitig zumindest ein zweiter der Festkörperaktoren zum Ausführen einer Bewegung angesteuert wird.

Die Schaltungsanordnung weist bevorzugt einen Umschalter auf zum wahlweise entweder Messen der elektrischen Größe an dem zumindest einen ersten der Festkörperaktoren oder Ansteuern des zumindest einen ersten der Festkörperaktoren zu einer Bewegung. Dadurch kann ein Festkörperaktor mit Doppelfunktion als Sensorkomponente und als Antriebskomponente eingesetzt werden. Andernfalls wäre z.B. auch ein Festkörperaktor als reiner Sensor zusätzlich zu zwei oder mehr Antriebs-Festkörperaktoren einsetzbar.

Die Schaltungsanordnung weist vorzugsweise einen Vergleicher zum Vergleichen der elektrischen Größe mit dem Ansteuersignal zum Ansteuern des zumindest einen zweiten der Festkörperaktoren auf zum Bereitstellen der Sensordaten abhängig vom Verhältnis der elektrischen Größe und des Ansteuersignals zueinander.

Zwischen zumindest einem der Festkörperaktoren und dem Antriebskörper ist bevorzugt ein Übertragungselement angeordnet zum mechanischen Übertragen einer Bewegung des entsprechenden der Festkörperaktoren auf den Antriebskörper.

Die Festkörperaktoren sind bevorzugt als Biegeaktoren ausgestaltet. Der Antriebskörper und die Welle können über jeweilige Verzahnungen ineinander eingreifen.

Bevorzugt wird eigenständig auch eine Schaltungsanordnung eines solchen Antriebs, die ausgestaltet und/oder gesteuert ist zum Messen einer Sensorspannung als elektrischer Größe an zumindest einem ersten der Festkörperaktoren während der zumindest eine zweite der Festkörperaktoren zum Ausführen einer Bewegung mittels eines Ansteuersignals angesteuert wird und während der zumindest eine erste der Festkörperaktoren nicht zu einer Bewegung angesteuert wird und einen Vergleicher aufweist zum Vergleichen der elektrischen Größe mit dem Ansteuersignal zum Ansteuern des zumindest einen zweiten der Festkörperaktoren zum Bereitstellen der Sensordaten abhängig vom Verhältnis der elektrischen Größe und des Ansteuersignals zueinander.

Die Schaltungsanordnung ist bevorzugt mit einem Umschalter zum wahlweise entweder Messen der elektrischen Größe an dem zumindest einen ersten der Festkörperaktoren oder Ansteuern des zumindest einen ersten der Festkörperaktoren zu einer Bewegung ausgestaltet.

Beansprucht wird eigenständig auch ein Verfahren zum Gewinnen von Sensordaten aus einem solchen festkörperaktorischen, insbesondere piezoelektrischen Antrieb, bei dem zumindest zwei der Festkörperaktoren zum Versetzen des Antriebskörpers in eine umlaufende Verschiebebewegung zum Antreiben der Welle angesteuert werden und Sensordaten aus zumindest einem der Festkörperaktoren gewonnen werden, wobei eine elektrische Größe, insbesondere eine Sensorspannung, an zumindest einem ersten solcher Festkörperaktoren gemessen wird, während gleichzeitig zumindest ein zweiter der Festkörperaktoren mittels eines Ansteuersignals zum Ausführen einer Bewegung angesteuert wird, wobei während des Messens der elektrischen Größe an dem zumindest einen ersten der Festkörperaktoren der zumindest eine erste der Festkörperaktoren nicht zum Ausführen einer Bewegung angesteuert wird. Der zumindest eine erste der Festkörperaktoren kann geschaltet werden, wahlweise entweder zum Messen der elektrischen Größe an diesem zumindest einen ersten der Festkörperaktoren oder zum Ansteuern dieses zumindest einen ersten der Festkörperaktoren zu einer Bewegung.

Die elektrische Größe kann auf einfache Art und Weise von dem zumindest einen ersten der Festkörperaktoren mit dem Ansteuersignal zum Ansteuern des zumindest einen zweiten der Festkörperaktoren zum Bereitstellen der Sensordaten abhängig vom Verhältnis der elektrischen Größe und des Ansteuersignals zueinander verglichen werden. Das Vergleichen kann z.B. durch das Durchführen eines Korrelationsverfahrens der zumindest einen elektrischen Größe des zumindest einen ersten der Festkörperaktoren mit dem zumindest einen Ansteuersignal des zumindest einen zweiten der Festkörperaktoren durchgeführt werden.

Die Sensordaten können in Bezug gestellt werden zu einem Blockierungszustand der Welle, insbesondere in Bezug gestellt werden zu einem teilweisen und/oder vollständigen Blockierungszustand der Welle. Die Welle wird zum Messen der elektrischen Größe bevorzugt in eine Drehwinkelvibration versetzt. Zur Detektion eines Anschlages wird bevorzugt zwischen einem Messzyklus und einem Betriebszyklus des Antriebs zumindest über mehrere solcher Zyklen fortwährend gewechselt.

Zur Anschlagerkennung werden somit Sensoreigenschaften der festkörperaktorischen, insbesondere piezoelektrischen Aktoren des Antriebes ausgenutzt. Alternativ können als Antriebselemente neben piezoelektrischen Aktoren aber auch beliebige andere Festkörperaktoren eingesetzt werden, z. B. elektrostriktive oder magnetostriktive Aktoren. Insbesondere können auch mehr als zwei Festkörperaktoren eingesetzt werden, und zwar sowohl hinsichtlich der als Sensoren eingesetzten als auch hinsichtlich der rein als Antrieb eingesetzten Festkörperaktoren.

Im Vergleich zu einem bekannten Instrumentenantrieb basierend auf einen elektromagnetischen Motor, benötigen der Abtrieb bzw. das Verfahren insbesondere keine zusätzliche Hardware, wenn ein Analog-Digital-Wandler mit nachgeschalteter Logik eingesetzt ist.

Ein Ausführungsbeispiel wird nachfolgend anhand der Zeichnung näher erläutert. Es zeigen:
- Fig. 1: schematisch Komponenten eines festkörperaktorischen, insbesondere piezoelektrischen Antriebs sowie Schaltungskomponenten zum Gewinnen von Sensordaten,
- Fig. 2: schematisch einzelne Komponenten eines festkörperaktorischen Antriebs aus Fig. 1 in einer Ausgestaltung zum Erkennen eines Anschlags beim Antreiben eines solchen festkörperaktorischen Antriebs und,
- Fig. 3: eine erfassbare Messspannung an einem solchen Antrieb in verschiedenen Betriebsstellungen im Bereich vor einer Kontaktierung eines Anschlags bis zur Blockierung des Antriebs durch den Anschlag.

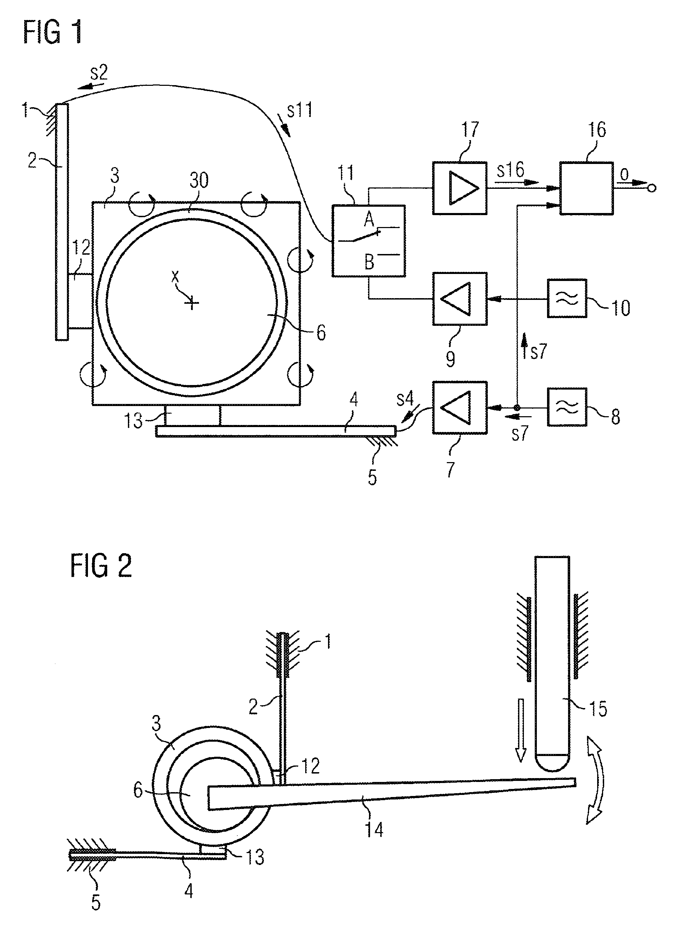

Wie dies aus Fig. 1 und 2 ersichtlich ist, besteht eine beispielhafte Festkörperaktor-Antriebsvorrichtung aus einer Vielzahl von Einzelkomponenten, wobei die dargestellten Komponenten eines festkörperaktorischen Antriebs um weitere Komponenten ergänzbar sind bzw. gegen gleich wirkende Komponenten anderer Bauart austauschbar sind.

Ein Antriebskörper 3, welcher allgemein auch als Antriebsring bezeichnet wird, ist über zwei oder mehr Festkörperaktoren 2, 4 an festen, drehsteifen Lagern 1 bzw. 5 gelagert. Die Lager 1, 5 können dabei beispielsweise durch Wandungen eines Gehäuses ausgebildet sein, wobei ein solches Gehäuse auch die weiteren Komponenten aufnehmen kann. Insbesondere kann in einem solchen Gehäuse eine Welle 6 gelagert sein, welche durch eine Antriebskörperöffnung des Antriebskörpers 3 hindurchläuft oder zumindest in diese hineinläuft. Gemäß alternativer Ausführungsform kann jedoch ein entsprechend zylindrischer Antriebskörper auch innerhalb einer als Hohlwelle ausgebildeten Welle eingesetzt sein.

Die Festkörperaktoren 2, 4 sind dabei derart angeordnet, dass sie den Antriebskörper 3 relativ zu den Lagern 1, 5 in eine Translationsbewegung in einer Ebene senkrecht zur axialen Richtung bzw. zur Längserstreckung der Welle 6 versetzen. Die Translationsbewegung versetzt den Antriebskörper 3 dabei in eine Hin- und Herbewegung. Die Antriebskörperachse verschiebt sich aus Sicht der Wellenachse X dabei um die Wellenachse X. Üblicherweise ist bei einer solchen Anordnung ein Außendurchmesser der Welle 6 geringer als ein Innendurchmesser der Antriebskörperöffnung des Antriebskörpers 3 dimensioniert. Der Antriebskörper 3 wird durch die Festkörperaktoren 2, 4 derart verstellt, dass eine Wellen-Außenwandung der Welle 6 vorzugsweise durchgehend mit einer Antriebskörper-Innenwandung der Antriebskörperöffnung 30 in Reib- und Formschluss steht, so dass die Bewegung des Antriebskörpers 3 die Welle 6 in eine Wellenrotation versetzt.

Bei der dargestellten Ausgestaltung sind die Festkörperaktoren 2, 4 als Biegeaktoren mit einer Längserstreckung ausgestaltet, wobei die Längserstreckungen der Biegeaktoren im Fall eines quadratischen Antriebskörpers 3 in einer Grundstellung vorzugsweise parallel zu Außenwandungen des Antriebskörpers 3 verlaufen. Andere geometrische Anordnungen sind jedoch ebenfalls umsetzbar. Außerdem ist auch eine Ausgestaltung mit Linearaktoren senkrecht in Richtung einer mittigen Position der Antriebskörperöffnung 30 prinzipiell einsetzbar.

Bei der dargestellten Ausführungsform sind zwischen den von den Lagern 1, 5 abgewandten Endabschnitten der Festkörperaktoren 2 bzw. 4 und der benachbarten Wandung des Antriebskörpers 3 Übertragungselemente 12 bzw. 13 angeordnet. Die Bewegung der Festkörperaktoren 2, 4 wird somit durch die mechanischen Übertragungselemente 12, 13 auf den beweglichen Antriebskörper 3 übertragen. Gleichzeitig werden die Bewegungen der Festkörperaktoren 2, 4 voneinander entkoppelt.

Vorzugsweise, jedoch nicht zwingend notwendig, weist der Antriebskörper 3 im Bereich der Antriebskörperöffnung 30 eine Innenverzahnung auf, welche dimensioniert ist, in eine entsprechende Außenverzahnung der in diesem Fall außen verzahnten Welle 6 einzugreifen, wobei die Welle 6 bei einer solchen Anordnung als ein Rotor wirkt. Vorzugsweise ist die Welle 6 ortsfest, aber drehbar in demselben Gehäuse gelagert, wie die Lager 1, 5.

Durch die Bewegung des Antriebskörpers 3 rollt die drehbar gelagerte Welle 6 auf der Innenfläche des Antriebskörpers 3 ab. Durch die Übertragungselemente 12, 13 als mechanische Übertrager werden die Bewegungen der Festkörperaktoren voneinander entkoppelt. Das heißt, bei frei laufender Welle 6 ist der mechanische Kraftübertragungspfad von einem Festkörperaktor 2 zum anderen Festkörperaktor 4 sehr weich. Eine Bewegung des einen Festkörperaktors 2 bewirkt nahezu keine Kraftwirkung auf den anderen Festkörperaktor 4 und umgekehrt.

Zum Ansteuern der Festkörperaktoren 2, 4 dient eine Steuereinrichtung 7 - 10, welche über Leiter die einzelnen Festkörperaktoren 2, 4 mit Spannungen bzw. Ladungen ansteuert. Entsprechend der Spannungen bzw. Ladungen biegen sich die Festkörperaktoren 2, 4 entsprechend. Außerdem können in umgekehrter Richtung Signale, insbesondere Spannungen oder Ladungen zu der Steuereinrichtung übertragen werden. Dies ermöglicht die Ausnutzung der Doppelfunktionalität der Festkörperaktoren 2, 4, um diese nicht nur als Aktoren sondern auch als Sensoren einzusetzen. Auf die Festkörperaktoren 2, 4 einwirkende Kräfte verursachen in diesen eine Ladungsverschiebung bzw. Potenzialänderung, welche dem von der Steuereinrichtung angelegten Spannungs- oder Ladungswert überlagert wird.

Zur Ansteuerung des Motors sind angeordnet ein Aktortreiber 7 zum Bereitstellen eines Treiber- bzw. Ansteuersignals s2 für den ersten der Festkörperaktoren 2, ein Signalgenerator 8 zum Bereitstellen eines Eingangssignals für den Aktortreiber 7, ein zweiter Aktortreiber 9 zum Bereitstellen eines Treibersignals s4 für den zweiten der Festkörperaktoren 4 und ein zweiter Signalgenerator 10 zum Bereitstellen eines Eingangssignals für den zweiten Aktortreiber 9. Die Aktortreiber 7, 9 und die Signalgeneratoren 8, 10 steuern die Festkörperaktoren mit jeweils einem näherungsweise sinusförmigen, aber um 90° phasenversetzten Signal an. Diese Ansteuerung führt beim Antriebskörper 3 zu der kreisförmigen Translation. Der dadurch entstehende Kontaktpunkt oder Kontaktbereich zwischen dem Antriebskörper 3 und der Welle 6 rotiert um die Welle 6 und versetzt diese in eine gegenläufige Rotation.

Durch eine nicht dargestellte Schaltung kann durch einen Umschalter 11 der erste Festkörperaktor 2 als wahlweise entweder Sensor oder Festkörperaktor betrieben werden. Zur Ansteuerung als Antrieb ist der Umschalter 11 in eine entsprechende Antriebsposition B geschaltet. Durch Umschalten des Umschalters 11 in eine Messposition A wird der erste Festkörperaktor 2 von seinem Ansteuersignal s2 getrennt und auf eine Messschaltung geschaltet. Die Messschaltung umfasst vorzugsweise einen Vorverstärker 17 und einen Vergleicher 16.

Dadurch wird in der Messstellung des Umschalters 11 nur noch der zweite Festkörperaktor 4 aktiv angesteuert. Die Bewegung des zweiten Festkörperaktors 4 wird insbesondere über eine Verzahnung im Kontaktpunkt zwischen dem Antriebskörper 3 und der Welle 6 in eine Drehwinkelvibration der Welle 6 umgesetzt. Die Bewegung der Welle 6 wird durch das entsprechende Übertragungselement 12 auf den als Sensor dienenden ersten Festkörperaktor 2 übertragen. Das dem entsprechende Sensorsignal s11 wird über den Umschalter 11 dem Vorverstärker 17 zugeführt und steht dem nachgeschalteten Vergleicher 16 an dessen Eingang als vorzugsweise verstärktes Sensorsignal s16 zur Verfügung. Der Vergleicher 16 vergleicht das verstärkte Sensorsignal s16 des ersten Festkörperaktors 2 mit dem Ansteuersignal s7 für den zweiten Festkörperaktor 4. Dieses Ansteuersignal für den zweiten Festkörperaktor 4 kann vorzugsweise direkt vom Ausgang des dieses bereitstellenden zweiten Signalgenerators 8 abgenommen werden. Das so gemessene bzw. bestimmte Maß der Übereinstimmung von einerseits dem Sensorsignal s11 bzw. s16 und andererseits dem Aktor- bzw. Ansteuersignal s7 ist ein Maß für die Blockierung der Motorwelle. Aus dem Vergleicher oder einer nachgeschalteten Schaltung können ein entsprechendes Ausgangssignal bzw. entsprechende Sensordaten o ausgegeben werden.

Das entsprechende Verfahren zum Gewinnen von Sensordaten aus einem festkörperaktorischen, insbesondere piezoelektrischen Antrieb stellt einen besonderen Ansatz zur Gewinnung von Sensordaten aus dem dargestellten piezoelektrischen Ringmotor dar. Grundlage des Verfahrens bildet dabei die Messung der mechanischen Steifigkeit eines Kraftübertragungspfades von einem Aktor der Festkörperaktoren zu einem weiteren Aktor innerhalb des Antriebes. Dazu wird mindestens einer der mindestens zwei Festkörperaktoren 2 von der Treiberelektronik abgetrennt und als Kraftsensor betrieben. Mindestens ein weiterer Festkörperaktor 4 wird "normal" angesteuert und versetzt die Welle 6 in Vibration, d.h. nicht in eine sonst übliche Rotation.

Ist der Rotor bzw. die Welle 6 frei beweglich, wird in einem Sensoraktor nur ein sehr verzerrtes Abbild des Ansteuersignals der aktiven Festkörperaktoren 2, 4 "induziert". Dabei basiert die Sensorwirkung des inaktiven Festkörperaktors 2 auf der Generierung von Ladung durch Krafteinwirkung auf den Festkörperaktor 2. Die generierte Ladung ist über der Aktorkapazität als eine proportionale Spannung abgreifbar. Ist die Welle 6 des Antriebes in ihrer Bewegung begrenzt, dann macht sich dies in einer Versteifung der Antriebsmechanik bemerkbar. Das Ansteuersignal s7 für die aktiven Festkörperaktoren 4 wird direkter, d.h. insbesondere ohne Verzerrung, auf den inaktiven (Sensor-)Aktor übertragen. Das heißt, durch Korrelation des Ansteuersignals s7 eines aktiven Festkörperaktors 4 mit dem Sensorsignal s11, s16 eines inaktiven Festkörperaktors 2 kann die Blockierung der Welle bzw. das Maß von deren Abbremsung gemessen werden.

Insbesondere kann das Anstoßen eines an der Welle 6 befestigten Zeigers 14 an einen mechanischen Anschlag 15 eines montierten Zeigers registriert werden, wie dies in Fig. 2 skizziert ist. Zur Nutzung der Anschlagsdetektion wird die als Rotor bzw. Motorwelle dienende Welle 6 schrittweise an den Anschlag 15 herangefahren. Antriebs- bzw. Fahrzyklus und Messzyklus wechseln durch entsprechendes Umschalten des Umschalters 11 einander ab.

Ein Schritt liegt somit in der Nutzung der Erkenntnis, dass das insbesondere das Blockieren der Welle 6 eines Piezoringmotors mit Mikroverzahnung den Kraftübertragungspfad zwischen den Festkörperaktoren des Antriebes mechanisch versteift. Der Aufbau ist entsprechend dadurch gekennzeichnet, dass ein Aktor inaktiv geschaltet wird und eine Ansteuerung der aktiven Aktoren oder des aktiven Festkörperaktors 2 die Welle 6 in eine Drehwinkelvibration versetzt. Das Sensor- bzw. Spannungssignal s16 des mindestens einen inaktiven Festkörperaktors 2 wird ausgewertet und mit der Signalform des Ansteuersignals s7 des mindestens einen aktiven Festkörperaktors 4 verglichen.

Eine mögliche Auswertung des Spannungs- bzw. Sensorsignals s16 stellt die Korrelation mit dem oder den Ansteuersignalen s7 dar. Je höher die Korrelation, desto steifer ist die Mechanik zwischen aktiven und inaktiven Festkörperaktoren 4 bzw. 2. Damit ist über die Korrelation oder einen andersartigen Signalvergleich indirekt die Messung der Steifigkeit der Kopplung zwischen den Festkörperaktoren 2, 4 möglich, und damit auch die Messung des Grades der Blockierung der Welle 6. Zur Detektion des Anschlages 15 wird zwischen Mess- und Betriebszyklus des Motors bzw. Antriebs ständig gewechselt. Gelangt z. B. der auf die Welle 6 montierte Zeiger 14 eines Anzeigeinstrumentes in die Nähe eines Anschlages (Nullwert), so wird im Messzyklus die Vibration der Welle 6 messbar blockiert.

Zur Verifikation des Aufbaus wurde ein exemplarischer Versuch durchgeführt, in dem der Bewegungsspielraum der Welle 6 mit einem aufgesetzten Zeiger 14 durch den verschiebbar gelagerten Anschlag 15 blockiert werden kann. Der Aufbau ist in Fig. 2 skizziert. Die Antriebskomponenten sind vergleichbar denen in Fig. 1 und bezeichnen mit gleichen Bezugszeichen gleiche oder äquivalente Komponenten und Funktionalitäten. Dies sind insbesondere zwei Biegeaktoren als die Festkörperaktoren 2, 4, Lager 1, 5 der Biegeaktoren im nicht dargestellten Motor- bzw. Antriebsgehäuse 1, 5, zwei mechanische Übertragungselemente 12, 13, ein Antriebsring als der Antriebskörper 3 und eine Motorwelle als die Welle 6. Zusätzlich zum Aufbau aus Fig. 1 ist im Aufbau aus Fig. 2 ein Zeiger 14 auf die Welle 6 montiert. Eine Vorrichtung, bestehend aus einem verschiebbaren Bolzen dient zum Einschränken der Bewegung des Zeigers und simuliert einen Anschlag 15. Im Experiment wird der Bolzen stückweise in Richtung des Zeigers 14 bewegt, die Bewegungsfreiheit des Zeigers 14 dadurch eingeschränkt und im Weiteren Druck auf den Zeiger 14 ausgeübt, bis das Blockiermoment zwischen Antriebskörper 3 und Welle 6 überwunden wird. Der Parameter C entsprechend der Umschalterposition B zum Antreiben des ersten Festkörperaktors 2 dient zur Beschreibung der Einstellung des verschiebbaren Bolzens in Relation zum Zeiger 14. Eine Einstellung des Bolzens als Anschlag 15, bei welcher der Zeiger 14 bei Ansteuerung mit einem aktiven Festkörperaktor 4 gerade nicht berührt wird, wird mit C = 0% definiert und eine Einstellung des Bolzens, bei der es gerade noch nicht zum unelastischen Schlupf der Welle 6 kommt, wird mit C = 100% definiert.

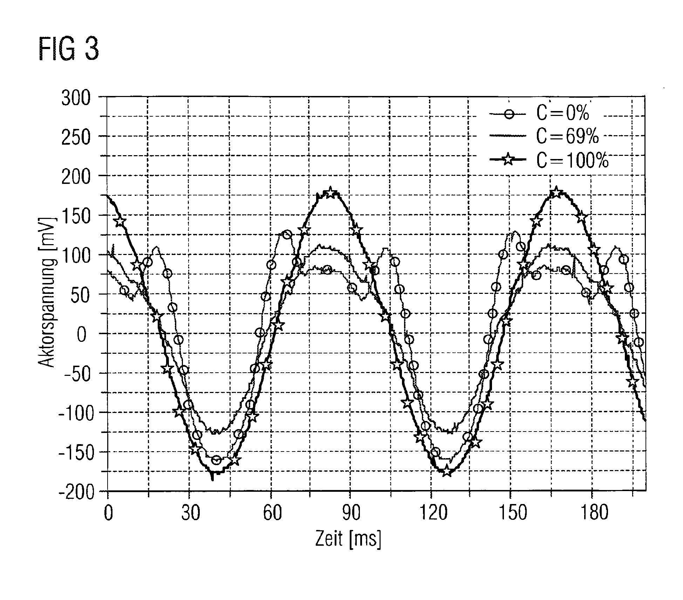

Das Experiment wurde mit Einstellungen des Bolzens 15 im Bereich C = 0%...100% durchgeführt. Zur Messung wurde der aktive Festkörperaktor 4 mit einem sinusförmigen Ansteuersignal mit einer Peak-to-Peak Spannung von U = 63V angesteuert. Der Zeiger 14 hatte versuchsgemäß eine Länge von 1 = 40mm. Fig. 3 zeigt die gewonnen Daten. Die im Diagramm aus Fig. 3 dargestellte Messspannung wurde an einer Schicht des inaktiven Aktors gemessen. Im Diagramm ist der Spannungsverlauf für drei verschiedene Einstellungen des Bolzens über der Zeit dargestellt. Deutlich ist der sehr unterschiedliche Signalverlauf für die verschiedenen Werte von C zu erkennen. Bei C = 0% weist der Signalverlauf die geringste Korrelation zum Ansteuersignal auf. Bei C = 100% ist das Messsignal nahezu sinusförmig und die Korrelation damit maximal. Damit lässt sich durch eine üblich ausgestaltbare geeignete Signalverarbeitung der Anschlag des Zeigers 14 sicher registrieren.

## Patentansprüche

1. Festkörperaktorischer Antrieb, insbesondere piezoelektrischer Antrieb, zum Antreiben einer Welle (6) in Rotation um deren Wellenachse (X) und zum Gewinnen von Sensordaten (o) mit
- einem Antriebskörper (3), wobei ein umlaufender Wellen-Umfangsbereich der Welle (6) in einem längs des umlaufenden Wellen-Umfangsbereichs wandernden Kontaktabschnitt in formschlüssigen Kontakt oder in Reibkontakt mit einem in einem umlaufenden Wandungs-Umfangsbereich des Antriebskörpers (6) wandernden Wandungs-Kontaktabschnitt versetzbar ist,
- zumindest zwei Festkörperaktoren (2, 4), die zwischen Lagern (1 bzw. 5) und dem Antriebskörper (3) angeordnet sind zum Versetzen des Antriebskörpers (3) in eine umlaufende Verschiebebewegung zum Antreiben der Welle (6), und
- einer Schaltungsanordnung zum Ansteuern zumindest zweier der Festkörperaktoren (2, 4) und zum Gewinnen der Sensordaten (o),
wobei
- die Schaltungsanordnung ausgestaltet und/oder gesteuert ist zum Messen einer elektrischen Größe an zumindest einem ersten solcher Festkörperaktoren (2) während gleichzeitig zumindest ein zweiter der Festkörperaktoren (4) zum Ausführen einer Bewegung angesteuert wird,
**dadurch gekennzeichnet,**
**dass** die Schaltungsanordnung ausgestaltet und/oder gesteuert ist während des Messens der elektrischen Größe an dem zumindest einen ersten der Festkörperaktoren (2) den zumindest einen ersten der Festkörperaktoren (2) nicht zu einer Bewegung anzusteuern.

2. Antrieb nach Anspruch 1, bei dem die Schaltungsanordnung einen Umschalter (11) aufweist zum wahlweise entweder Messen der elektrischen Größe an dem zumindest einen ersten der Festkörperaktoren (2) oder Ansteuern des zumindest einen ersten der Festkörperaktoren (2) zu einer Bewegung.

3. Antrieb nach Anspruch 1 oder 2, bei dem die Schaltungsanordnung einen Vergleicher (16) zum Vergleichen der elektrischen Größe mit dem Ansteuersignal (s7) zum Ansteuern des zumindest einen zweiten der Festkörperaktoren (4) aufweist zum Bereitstellen der Sensordaten abhängig vom Verhältnis der elektrischen Größe und des Ansteuersignals (s7) zueinander.

4. Antrieb nach einem vorstehenden Anspruch, bei dem zwischen zumindest einem der Festkörperaktoren (2, 4) und dem Antriebskörper (3) ein Übertragungselement (12 bzw. 13) angeordnet ist zum mechanischen Übertragen einer Bewegung des entsprechenden der Festkörperaktoren (2, 4) auf den Antriebskörper (3).

5. Antrieb nach einem vorstehenden Anspruch, bei dem die Festkörperaktoren (2, 4) als Biegeaktoren ausgestaltet sind.

6. Antrieb nach einem vorstehenden Anspruch, bei dem der Antriebskörper (3) und die Welle (6) über jeweilige Verzahnungen ineinander eingreifen.

7. Schaltungsanordnung eines Antriebs nach einem vorstehenden Anspruch, die
- ausgestaltet und/oder gesteuert ist zum Messen einer Sensorspannung (s2, s16) als der elektrischen Größe an zumindest einem ersten der Festkörperaktoren (2) während der zumindest eine zweite der Festkörperaktoren (4) zum Ausführen einer Bewegung mittels eines Ansteuersignals (s4, s7) angesteuert wird und während der zumindest eine erste der Festkörperaktoren (2) nicht zu einer Bewegung angesteuert wird und
- einen Vergleicher (16) aufweist zum Vergleichen der elektrischen Größe mit dem Ansteuersignal (s7) zum Ansteuern des zumindest einen zweiten der Festkörperaktoren (4) zum Bereitstellen der Sensordaten (o) abhängig vom Verhältnis der elektrischen Größe und des Ansteuersignals (s7) zueinander.

8. Schaltungsanordnung nach Anspruch 7 mit einem Umschalter (11) zum wahlweise entweder Messen der elektrischen Größe an dem zumindest einen ersten der Festkörperaktoren (2) oder Ansteuern des zumindest einen ersten der Festkörperaktoren (2) zu einer Bewegung.

9. Verfahren zum Gewinnen von Sensordaten (o) aus einem festkörperaktorischen, insbesondere piezoelektrischen Antrieb, nach einem vorstehenden Anspruch, bei dem
- zumindest zwei der Festkörperaktoren (2, 4) zum Versetzen des Antriebskörpers (3) in eine umlaufende Verschiebebewegung zum Antreiben der Welle (6) angesteuert werden und
- Sensordaten (o) aus zumindest einem der Festkörperaktoren (2) gewonnen werden,
- wobei eine elektrische Größe, insbesondere eine Sensorspannung (s2, s16), an zumindest einem ersten solcher Festkörperaktoren (2) gemessen wird, während gleichzeitig zumindest ein zweiter der Festkörperaktoren (4) mittels eines Ansteuersignals (s4, s7) zum Ausführen einer Bewegung angesteuert wird,
**dadurch gekennzeichnet,**
**dass** während des Messens der elektrischen Größe an dem zumindest einen ersten der Festkörperaktoren (2) der zumindest eine erste der Festkörperaktoren (2) nicht zum Ausführen einer Bewegung angesteuert wird.

10. Verfahren nach Anspruch 9, bei dem der zumindest eine erste der Festkörperaktoren (2) geschaltet wird wahlweise entweder zum Messen der elektrischen Größe an diesem zumindest einen ersten der Festkörperaktoren (2) oder zum Ansteuern dieses zumindest einen ersten der Festkörperaktoren (2) zu einer Bewegung.

11. Verfahren nach einem der Ansprüche 9 - 10, bei dem die elektrische Größe von dem zumindest einen ersten der Festkörperaktoren (2) mit dem Ansteuersignal (s7) zum Ansteuern des zumindest einen zweiten der Festkörperaktoren (4) verglichen wird zum Bereitstellen der Sensordaten (o) abhängig vom Verhältnis der elektrischen Größe und des Ansteuersignals (s7) zueinander.

12. Verfahren nach einem der Ansprüche 9 - 11, bei dem das Vergleichen durch das Durchführen eines Korrelationsverfahrens der zumindest einen elektrischen Größe des zumindest einen ersten der Festkörperaktoren (2) mit dem zumindest einen Ansteuersignal (s7) des zumindest einen zweiten der Festkörperaktoren (4) durchgeführt wird.

13. Verfahren nach einem der Ansprüche 9 - 12, bei dem die Sensordaten (o) in Bezug gestellt werden zu einem Blockierungszustand der Welle (6), insbesondere in Bezug gestellt werden zu einem teilweisen und/oder vollständigen Blockierungszustand der Welle (6).

14. Verfahren nach einem der Ansprüche 9 - 13, bei dem die Welle (6) zum Messen der elektrischen Größe in eine Drehwinkelvibration versetzt wird.

15. Verfahren nach einem der Ansprüche 9 - 14, bei dem zur Detektion eines Anschlages (15) zwischen einem Messzyklus und einem Betriebszyklus des Antriebs zumindest über mehrere solcher Zyklen fortwährend gewechselt wird.

## Claims

1. Solid-state actuator drive, in particular piezoelectric drive, for driving a shaft (6) in rotation about its shaft axis (X) and for the acquisition of sensor data (o), with
- a drive body (3), a rotating shaft circumferential region of the shaft (6) being capable, in a contact portion travelling along the rotating shaft circumferential region, of being put into positive contact or into frictional contact with a wall contact portion travelling in a rotating wall circumferential region of the drive body (3),
- at least two solid-state actuators (2, 4) which are arranged between bearings (1 and 5) and the drive body (3) for the purpose of setting the drive body (3) in rotating displacement motion for driving the shaft (6), and
- a circuit arrangement for activating at least two of the solid-state actuators (2, 4) and for the acquisition of the sensor data (o),
- the circuit arrangement being configured and/or controlled for measuring an electrical quantity on at least one first of such solid-state actuators (2), while at the same time at least one second of the solid-state actuators (4) is activated for the purpose of executing a movement,
**characterized in that** the circuit arrangement is configured and/or controlled, during the measurement of the electrical quantity on the at least one first of the solid-state actuators (2), not to activate the at least one first of the solid-state actuators (2) to execute a movement.

2. Drive according to Claim 1, in which the circuit arrangement has a changeover switch (11) for selectively either measuring the electrical quantity on the at least one first of the solid-state actuators (2) or activating the at least one first of the solid-state actuators (2) to execute a movement.

3. Drive according to Claim 1 or 2, in which the circuit arrangement has a comparator (16) comparing the electrical quantity with the activation signal (s7) for activating the at least one second of the solid-state actuators (4), for the purpose of providing the sensor data as a function of the ratio of the electrical quantity and of the activation signal (s7) to one another.

4. Drive according to a preceding claim, in which a transmission element (12 or 13) is arranged between at least one of the solid-state actuators (2, 4) and the drive body (3) for the purpose of the mechanical transmission of a movement of the corresponding solid-state actuator of the solid-state actuators (2, 4) to the drive body (3).

5. Drive according to a preceding claim, in which the solid-state actuators (2, 4) are configured as bending actuators.

6. Drive according to a preceding claim, in which the drive body (3) and the shaft (6) engage one in the other via respective toothings.

7. Circuit arrangement of a drive according to a preceding claim, which
- is configured and/or controlled for measuring a sensor voltage (s2, s16) as the electrical quantity on at least one first of the solid-state actuators (2), while the at least one second of the solid-state actuators (4) is activated by means of an activation signal (s4, s7) for the purpose of executing a movement and while the at least one first of the solid-state actuators (2) is not activated to execute a movement, and
- has a comparator (16) for comparing the electrical quantity with the activation signal (s7) for activating the at least one second of the solid-state actuators (4), for providing the sensor data (o) as a function of the ratio of the electrical quantity and of the activation signal (s7) to one another.

8. Circuit arrangement according to Claim 7 with a changeover switch (11) for selectively either measuring the electrical quantity on the at least one first of the solid-state actuators (2) or activating the at least one first of the solid-state actuators (2) to execute a movement.

9. Method for the acquisition of sensor data (o) from a solid-state actuator, particularly piezoelectric, drive, according to a preceding claim, in which
- at least two of the solid-state actuators (2, 4) are activated to set the drive body (3) in rotating displacement motion for driving the shaft (6), and
- sensor data (o) are acquired from at least one of the solid-state actuators (2),
- an electrical quantity, in particular a sensor voltage (s2, s16), being measured in at least one first of such solid-state actuators (2), while at the same time at least one second of the solid-state actuators (4) is activated by means of an activation signal (s4, s7) to execute a movement, **characterized in that**, during the measurement of the electrical quantity on the at least one first of the solid-state actuators (2), the at least one first of the solid-state actuators (2) is not activated to execute a movement.

10. Method according to Claim 9, in which the at least one first of the solid-state actuators (2) is switched selectively either for measuring the electrical quantity on this at least one first of the solid-state actuators (2) or for activating this at least one first of the solid-state actuators (2) to execute a movement.

11. Method according to one of Claims 9 - 10, in which the electrical quantity from the at least one first of the solid-state actuators (2) is compared with the activation signal (s7) for activating the at least one second of the solid-state actuators (4), for providing the sensor data (o) as a function of the ratio of the electrical quantity and of the activation signal (s7) to one another.

12. Method according to one of Claims 9 - 11, in which the comparison is carried out by performing a method for correlating the at least one electrical quantity of the at least one first of the solid-state actuators (2) with the at least one activation signal (s7) of the at least one second of the solid-state actuators (4).

13. Method according to one of Claims 9 - 12, in which the sensor data (o) are related to a blocking state of the shaft (6), in particular are related to a partial and/or complete blocking state of the shaft (6).

14. Method according to one of Claims 9 - 13, in which the shaft (6) is set in torsional angular vibration for the measurement of electrical quantity.

15. Method according to one of Claims 9 - 14, in which, in order to detect abutment (15) between a measuring cycle and an operating cycle of the drive, a continual change is made at least over several such cycles.

## Revendications

1. Entraînement à actionneurs à l'état solide, notamment entraînement piézoélectrique, pour entraîner un arbre (6) en rotation autour de son axe (X) et pour obtenir des données (o) de capteur, comprenant
- un corps (3) d'entraînement, une zone périphérique tournante de l'arbre (6) pouvant être mise, dans une partie de contact se déplaçant le long de la zone périphérique tournante de l'arbre, en contact à complémentarité de forme ou en contact de frottement avec une partie de contact de paroi se déplaçant dans une zone périphérique de paroi tournante du corps (6) d'entraînement,
- au moins deux actionneurs s (2, 4) à l'état solide, qui sont montés entre des paliers (1 ou 5) et le corps (3) d'entraînement, pour mettre le corps (3) d'entraînement en un mouvement tournant pour l'entraînement de l'arbre (6), et
un circuit de commande d'au moins deux des actionneurs (2, 4) à l'état solide et d'obtention des données (o) de capteur, et dans lequel
- le circuit est conformé et/ou est commandé pour la mesure d'une grandeur électrique sur au moins un premier actionneur (2) à l'état solide de ce genre, tandis qu'en même temps au moins un deuxième des actionneurs (4) à l'état solide est commandé pour exécuter un mouvement,
**caractérisé**
**en ce que** le circuit est conformé et/ou est commandé pour, pendant la mesure de la grandeur électrique sur le au moins un premier des actionneurs (2) à l'état solide, commander au au moins un premier des actionneurs (2) à l'état solide de ne pas effectuer un mouvement.

2. Entraînement suivant la revendication 1, dans lequel le circuit comporte un commutateur (11) pour au choix mesurer la grandeur électrique sur le au moins un premier des actionneurs (2) à l'état solide ou commander pour le mettre en mouvement le au moins un premier des actionneurs (2) à l'état solide.

3. Entraînement suivant la revendication 1 ou 2, dans lequel le circuit a un comparateur (16) pour la comparaison de la grandeur électrique au signal (s7) de commande du au moins un deuxième des actionneurs (4) à l'état solide pour mettre à disposition les données du capteur en fonction de la relation entre eux de la grandeur électrique et du signal (s7) de commande.

4. Entraînement suivant l'une des revendications précédentes, dans lequel entre au moins un des actionneurs (2, 4) à l'état solide et le corps (3) d'entraînement est disposé un élément (12 ou 13) de transmission pour la transmission mécanique d'un mouvement de celui correspondant des actionneurs (2, 4) à l'état solide au corps (3) d'entraînement.

5. Entraînement suivant l'une des revendications précédentes, dans lequel les actionneurs (2, 4) à l'état solide sont conformés en actionneurs de flexion.

6. Entraînement suivant l'une des revendications précédentes, dans lequel le corps (3) d'entraînement et l'arbre (6) s'interpénètre par des dentures respectives.

7. Circuit d'un entraînement suivant l'une des revendications précédentes, qui
- est conformé et/ou est commandé pour la mesure d'une tension (s2, s16) de capteur comme la grandeur électrique sur au moins un premier des actionneurs (2) à l'état solide, tandis qu'au moins un deuxième des actionneurs (4) à l'état solide est commandé au moyen d'un signal (s4, s7) de commande pour l'exécution d'un mouvement et tandis que le au moins un premier des actionneurs (2) à l'état solide n'est pas commandé pour être mis en mouvement, et
- a un comparateur (16) pour la comparaison de la grandeur électrique au signal (s7) de commande pour la commande du au moins un deuxième des actionneurs (4) à l'état solide pour la mise à disposition des données (o) de capteur en fonction de la relation entre eux de la grandeur électrique et du signal (s7) de commande.

8. Circuit d'un entraînement suivant la revendication 7, comprenant un commutateur (11) pour, au choix, mesurer la grandeur électrique sur le au moins un premier des actionneurs (2) à l'état solide ou commander le au moins un premier des actionneurs (2) à l'état solide pour le mettre en mouvement.

9. Procédé d'obtention de données (o) de capteur d'un entraînement à actionneurs à l'état solide, notamment d'un entraînement piézoélectrique, suivant l'une des revendications précédentes, dans lequel
- on commande au moins deux des actionneurs (2, 4) à l'état solide pour mettre le corps (3) d'entraînement en un mouvement tournant pour l'entraînement de l'arbre (6) et
- on obtient des données (0) de capteur d'au moins l'un des actionneurs (2) à l'état solide,
- dans lequel, on mesure une grandeur électrique, notamment une tension (s2, s16) de capteur, sur au moins un premier de ces actionneurs (2) à l'état solide, tandis qu'en même temps, on commande pour l'exécution d'un mouvement, au moyen d'un signal (s4, s7) de commande, un deuxième des actionneurs (4) à l'état solide,
**caractérisé,**
**en ce que** pendant la mesure de la grandeur électrique sur le au moins un premier des actionneurs (2) à l'état solide, on commande au moins au premier des actionneurs (2) à l'état solide de ne pas exécuter un mouvement.

10. Procédé suivant la revendication 9, dans lequel on met en circuit le au moins un premier des actionneurs (2) à l'état solide, au choix pour la mesure de la grandeur électrique sur ce au moins un premier des actionneurs (2) à l'état solide, ou pour la commande de ce au moins un premier des actionneurs (2) à l'état solide pour le mettre en mouvement.

11. Procédé suivant la revendication 9 à 10, dans lequel on compare la grandeur électrique du au moins un premier des actionneurs (2) à l'état solide au signal (s7) de commande du au moins un deuxième des actionneurs (4) à l'état solide pour la mise à disposition des données (o) de capteur en fonction de la relation entre eux de la grandeur électrique et du signal (s7) de commande.

12. Procédé suivant l'une des revendications 9 à 11, dans lequel on effectue la comparaison en effectuant un procédé de corrélation entre la au moins une grandeur électrique du au moins un premier des actionneurs (2) à l'état solide avec le au moins un signal (s7) de commande du au moins un deuxième des actionneurs (4) à l'état solide.

13. Procédé suivant l'une des revendications 9 à 12, dans lequel on met en relation les données (o) de capteur avec un état de blocage de l'arbre (6), en le mettant notamment en relation avec un état de blocage partiel et/ou complet de l'arbre (6).

14. Procédé suivant la revendication 9 à 13, dans lequel on met l'arbre (6) en vibration angulaire de rotation pour la mesure de la grandeur électrique.

15. Procédé suivant l'une des revendications 9 à 14, dans lequel, pour la détection d'un arrêt (15) entre un cycle de mesure et un cycle de fonctionnement de l'entraînement, on alterne continuellement au moins entre plusieurs cycles de ce genre.
